# EUROPÄISCHE PATENTSCHRIFT

(11) **EP 3 616 527 B1**
(45) Veröffentlichungstag und Bekanntmachung des Hinweises auf die Patenterteilung: **17.03.2021**
(21) Anmeldenummer: 18020420.8
(22) Anmeldetag: 30.08.2018
(51) Int. Cl.: A23C 19/09, A23P 30/10, A23L 5/10

(54) **VERFAHREN ZUR HERSTELLUNG VON KÄSE-KRÄCKERN**
METHOD FOR THE PREPARATION OF CHEESE CRACKERS
PROCÉDÉ DE FABRICATION DE BISCUITS SALÉS AU FROMAGE

(43) Veröffentlichungstag der Anmeldung: 04.03.2020
(73) Patentinhaber: HLM GmbH, 48145 Münster (DE)
(72) Erfinder: Heiler, Klaus-Peter, 59192 Bergkamen (DE)
(74) Vertreter: Kayser, Christoph

(56) Entgegenhaltungen:
- EP-A1- 1 614 355
- WO-A1-2012/167067
- US-A- 4 803 090
- US-A- 5 795 613
- US-A1- 2016 106 119
- TheSheDM: "Snack - Silicone Baking Cups + Microwave Cheese Crisps", r/ketorecipes - Posts , 17. April 2018 (2018-04-17), Seiten 1-3, XP002786067, Gefunden im Internet: URL:https://www.reddit.com/r/ketorecipes/c omments/8cuh0d/silicone_baking_cups_microw ave_cheese_crisps/ [gefunden am 2018-10-25]

## Beschreibung

Die vorliegende Erfindung betrifft ein Verfahren zur Herstellung von Käse-Kräckern mit den Schritten: Bereitstellen einer Käse-Rohmasse; Bereitstellen eines Mikrowellenofens; Portionieren der Käse-Rohmasse in einer feuerfesten Backform; Überführen der portionierten Käse-Rohmasse in den Mikrowellenofen, Backen der portionierten Käse-Rohmasse in dem Mikrowellenofen, und Entnehmen wenigstens eines gebackenen, portionierten Käse-Kräckers.

Aus EP 1 614 355 A1 ist ein Verfahren bekannt, in dem Käse-Kräcker mithilfe einer Microwelle hergestellt (gebacken) werden. Der Leistungsbereich der Microwelle liegt zwischen 500W und 900W. Ein Käseprodukt mit maximal 45% Feuchtigkeitsgehalt soll in der Microwelle über einen Zeitraum bis zu 240s auf einen Feuchtigkeitsgehalt von unter 15% getrocknet werden.

Der Nachteil eines solchen Verfahrens ist, dass eine bestimmte Vorauswahl eine Käseprodukts getroffen werden muss, um das Verfahren anwenden zu können und durch die relativ lange Verweilzeit im Microwellenofen unerwünschte Zwischenprodukte entstehen, die sich beim Verzehr nicht nur geschmacklich, sondern auch gesundheitlich nachteilig auswirken.

Aus US 5,795,613 A ist ein Verfahren bekannt, in dem ebenfalls Käse-Kräcker mithilfe einer Microwelle hergestellt (gebacken) werden. Die Microwelle arbeitet bei einer Leistung von 700W. Mit dem Verfahren kann nur ein für dieses Verfahren hergestellter nicht-schmelzender Käse verwendet werden. Das Verfahren ist also nicht für alle Rohkäse geeignet.

Aus US 4,803,090 A ist weiterhin ein Verfahren zur Herstellung von trocknen, knusprigen und gepufften Käse-Snacks bekannt, bei dem der Snack in einem Konvektionsofen gebacken und simultan oder danach durch Mikrowellen gekocht und getrocknet wird.

Aus XP-002786067 "Silicone Baking Cups + Microwave Cheese Crisps, Page 1 and 2, einem Chatverlauf aus dem Internet ist zu entnehmen, dass Käse-Cracker in kleinen Cups in der Microwelle hergestellt werden können. Es gibt keinen Hinweis auf Käsesorten und auf die Leistung der Microwelle.

Aus DE 10 2006 032 385 A1 ein Verfahren des Standes der Technik bekannt, bei dem eine Käse-Rohmasse mit Zusatzstoffen wie, Mais, Natriumchlorid und naturidentischen Aromastoffen in einem Mikrowellenofen erhitzt/gebacken wird. Nach dem Backvorgang ist ein aus dem Mikrowellenofen zu entnehmender Käseteig noch flexibel und wird anschließend zu Käseteigtaschen oder Käseteigröllchen geformt. Diese können dann anschließend frittiert werden, um ein knuspriges Produkt zu liefern.

Das Frittieren von Zwischenprodukten aus Käse oder aus einem Gemisch von Käse und Zusatzstoffen hat den Nachteil, dass bei einer nicht sehr streng überprüften Temperatur, z. B. über 190°C, gesundheitsschädliches Acrylamid gebildet werden kann. Bei einer sehr starken Überhitzung auf Temperaturen über 200°C kann sich zudem das starkgiftige Acrolein bilden. Zudem entstehen bei der Hitze von Fetten eine Reihe von Zersetzungsprodukten, wie z. B. konjungierte Fettsäuren, polymere Triglyceride sowie deren Abbauprodukte, d. h. kurzkettige Fettsäuren, Mono- und Diglyceride, Aldehyde, Ketone, Polymere, cyclische und aromatische Verbindungen, die den Rauchpunkt absenken, das Fett zähflüssiger machen und einen seifigen oder kratzigen Geschmack ergeben können.

Zudem ist es ein Nachteil, dass für die Herstellung eines Käse-Snackprodukts sowohl eine Mikrowelle als auch eine Fritteuse bereitgestellt werden müssen. Das macht die Herstellung aufwendig und teuer.

Die Aufgabe der vorliegenden Erfindung ist daher, ein Verfahren des Standes der Technik dahingehend weiterzubilden, dass ein knuspriges Käseprodukt ausschließlich in einem Mikrowellenofen hergestellt werden kann, ohne das gesundheitsschädliche Zwischenprodukte entstehen können.

Die Aufgabe wird dadurch gelöst, dass der Schritt des Backens unter einer abgegebenen Leistung des Mikrowellenofens von wenigstens 2800W, vorzugsweise von 2800W bis 3200W und ganz bevorzugt von wenigstens 3200W durchgeführt wird, wobei aus der Käse-Rohmasse durch die abgegebene Leistung sehr schnell Fett freigesetzt wird und die Käse-Rohmasse sehr schnell trocken/knusprig wird, ohne dass Zwischenprodukte entstehen können.

Durch die Formgebung einer Portion aus einer Käse-Rohmasse bereits vor dem Backvorgang bildet sich während des Backvorgangs aus der portionierten Käse-Rohmasse ein Käse-Kräcker als Endprodukt. Eine sich nach dem Backen im Mikrowellenofen anschließende Formgebung und ein nachträgliches Frittieren, um ein knuspriges, haltbares Endprodukt mit geringer Restfeuchte zu erhalten, ist nicht mehr erforderlich.

Der Schritt des Backens wird unter einer abgegebenen Leistung des Mikrowellenofens von wenigstens 2800W, vorzugsweise von 2800W bis 3200W und ganz bevorzugt von wenigstens 3200W durchgeführt. Mit der sehr hohen Leistung wird sichergestellt, dass die Käse-Rohmasse in dem Mikrowellenofen in sehr kurzer Zeit sehr stark erhitzt wird und dadurch sehr schnell trocken/knusprig wird, ohne dass chemische Zwischenprodukte entstehen können.

Ein weiterer Vorteil der vorliegenden Erfindung ist, dass der Schritt des Überführens der Käse-Rohmasse ein Überführen wenigstens einer geformten Portion in jeweils einer Backform umfasst. Damit wird ermöglicht, dass die Backform die Form des Käse-Kräckers als Endprodukt bestimmt.

Ein weiterer Vorteil der vorliegenden Erfindung ist, dass der Schritt des Entnehmens wenigstens eines gebackenen, portionierten Käse-Kräckers ein Reduzieren des Fettanteils des wenigstens einen gebackenen, portionierten Käse-Kräckers umfasst. Damit wird sichergestellt, dass ein beim Backvorgang freigewordener Fettanteil aus dem Käse-Kräcker entweichen kann.

Ein weiterer Vorteil der vorliegenden Erfindung ist, dass das Reduzieren des Fettanteils des wenigstens einen gebackenen, portionierten Käse-Kräckers ein Ablegen des wenigstens einen gebackenen, portionierten Käse-Kräckers auf einem saugfähigen Flies umfasst. Auf diese Weise kann das in den Käse-Kräcker nach dem Backvorgang frei gewordene Fett von dem gebackenen, portionierten Käse-Kräcker ablaufen und wird von dem saugfähigen Flies aufgenommen.

Ein weiterer Vorteil der vorliegenden Erfindung ist, dass der Schritt des Portionierens beim Zerteilen der Käse-Rohmasse wenigstens eine Portion mit einem Gewicht von 3g bis 7g, vorzugsweise von 3g bis 6g und ganz bevorzugt von 4g umfasst. Es hat sich gezeigt, dass diese Menge für eine Portion einer Käse-Rohmasse in einer Backform zu einer geeigneten Größe eines gebackenen, portionierten Käse-Kräckers führt.

Ein weiterer Vorteil der vorliegenden Erfindung ist, dass der Schritt des Portionierens der Käse-Rohmasse ein Bereitstellen einer Mehrzahl von Backformen umfasst. Für die Massenproduktion ist es günstig, mehrere Backformen für jeweils eine Portion bereitzustellen. Diese können dann gemeinsam in dem Mikrowellenofen gebacken und gemeinsam aus diesem entnommen werden.

Weitere Vorteile der vorliegenden Erfindung ergeben sich aus den weiteren Merkmalen der Unteransprüche.

Eine Ausführungsform der vorliegenden Erfindung wird im Folgenden näher beschrieben.

Für die Durchführung des erfindungsgemäßen Verfahrens zum Herstellen wenigstens eines Käse-Kräckers, vorzugsweise einer Mehrzahl von Käse-Kräckern, wird als Rohware Käse gewählt. Ein geeigneter Käse für die Durchführung des erfindungsgemäßen Verfahrens ist ein Hartkäse ab 30 % Fett in Trockenmasse oder auch ein Schnittkäse mit mindestens 40 % Fett in Trockenmasse, vorzugsweise aber ein Gouda mit wenigstens 45 % Fett in Trockenmasse. Im Grunde können aber beliebige Schnittkäsesorten ausgewählt werden. Für die gesamte Rohware gilt, dass diese über einen Zeitraum von 2 Monate bis etwa 3 Monate gelagert worden sind. Die Käse-Rohmasse besteht also in der bevorzugten Ausführungsform aus 100% Käse ohne weitere Zutaten, wie im eingangs genannten Stand der Technik, wenngleich in anderen Ausführungsformen durchaus auch Zutaten enthalten sein können. Bevorzugt sollen aber reine Käse-Kräcker hergestellt werden.

Für die Bereitstellung im erfindungsgemäßen Verfahren sollte der Käse eine Lagertemperatur von 4 Grad Celsius haben. Die bereitgestellte Käse-Rohmasse wird im erfindungsgemäßen Verfahren durch Teilung portioniert. Die Teilung der Käse-Rohmasse erfolgt z. B. durch Schneiden von Würfeln oder durch Häckseln. Die durch eine solche Teilung erzeugte Portion der Käse-Rohmasse soll ein Gewicht von 3g bis 7g, vorzugsweise von 3g bis 6g und ganz bevorzugt von 4g haben. Mit dieser Menge ergibt sich in der entsprechenden Backform ein einzelner Käse-Kräcker.

Vor einem Backvorgang werden hitzebeständige Backformen, z. B. aus Platinsilikon, bereitgestellt. In jede Backform wird eine Portion der Käse-Rohmasse eingegeben.

Jede Backform erhält also 3g bis 7g Käse-Rohmasse z.B. in Würfeln oder gehäckselten Stückchen.

Ein Mikrowellenofen umfasst eine Backkammer, die so dimensioniert ist, dass eine Mehrzahl von Backformen darin aufgenommen werden können. Derzeit sind Stückzahlen von 10 bis 25 Backformen möglich. Mikrowellenöfen mit größeren Backkammern können auch eine größere Stückzahl von Backformen aufnehmen.

Jede Backform wird in die Backkammer des Mikrowellenofens überführt. Wenn eine Mehrzahl von Backformen vorliegt, werden diese entweder einzeln oder gemeinsam überführt. Je nach Wahl der Rohware dauert der Backvorgang zwischen wenigstens 20 bis 60 Sekunden, vorzugsweise von 30 bis 50 Sekunden und ganz bevorzugt von 36 Sekunden bis 48 Sekunden. Dabei wird mit dem Mikrowellenofen eine Leistung von wenigstens 2800 Watt, vorzugsweise von 2800 Watt bis 3000 Watt und ganz bevorzugt von wenigstens 3200 Watt bereitgestellt. Derzeit haben solche Mikrowellenöfen vier Magnetrons von je 800 Watt, sodass der Backprozess unter Bereitstellung von 3200 Watt erfolgen kann. Der Mikrowellenofen arbeitet dann unter Volllast.

Nach dem Backvorgang werden die sich aus der Käse-Rohmasse gebildeten Käse-Kräcker in ihren Backformen (jeweils ein Käse-Kräcker in einer Backform) aus dem Mikrowellenofen entnommen. Bei der sehr schnellen Erhitzung wird aus der Käse-Rohmasse Fett freigesetzt, das nach einer Entnahme der jeweiligen Käse-Kräcker aus ihrer jeweiligen Backform reduziert bzw. abgeführt werden muss, um sich nicht wieder mit dem Käse-Kräcker zu verbinden. Dieses Reduzieren erfolgt durch ein Ablegen jedes der aus ihrer jeweiligen Backform entnommenen Käse-Kräcker auf eine saugfähige Unterlage, z. B. auf einen handelsüblichen saugfähigen Fliesstoff.

Nach dem Abkühlen wird der fertige Käse-Kräcker von dem saugfähigen Flies genommen und in eine Schale mit großer Öffnung zum weiteren Abkühlung gegeben.

Der für den Backvorgang verwendete Mikrowellenofen ist entweder ein normaler Mikrowellenofen mit einer einzigen Öffnung zum Einführen und Ausführen eines Backgutes oder ein Durchlauf-Backofen, in den die Käse-Rohmasse auf der einen Seite eingeführt und die fertigen Käse-Kräcker auf der anderen Seite ausgeführt werden.

Die fertigen Käse-Kräcker sind in einer Glasverpackung bei einem Vakuum von 98 % mindestens 2 Jahre haltbar.

Die fertigen Käse-Kräcker gemäß vorliegender Erfindung sind ohne Kühlung je nach Lagersituation 6 bis 8 Monate haltbar. Jeder einzelne Käse-Kräcker hat eine Restfeuchte von 3 %.

Für die Durchführung des Herstellungsverfahrens gemäß vorliegender Erfindung werden benötigt:
1. Messer zur Teilung von Schnitt- oder Hartkäse, auch halbautomatischer Speckschneider, halbautomatisches Teilungsgerät, elektrisch oder pneumatisch;
2. Manuell oder halbautomatisch bedienbare Schneidemaschine mit rotierendem Messer;
3. Schneidunterlagen aus Lebensmittel verträglichem Kunststoff oder Keramikplatte;
4. Aufnahmegefäße für zerteilte Rohware;
5. Unterbautische aus Edelstahl für die Handhabung;
6. Spülmaschine (Gläserspüler);
7. Fettabscheider;
8. Silikonformen für den Backprozess;
9. Mikrowellenofen - Leistung wenigstens 4x 800 Watt verteilt auf Unter- und Oberbereich (Unterhitze - Oberhitze) nur halbautomatische Taktung einstellbar;
10. Saugfähiges Flies zur Aufnahme des Backgutes nach dem Backvorgang;
11. Große Gefäße für die Aufnahme des Käse-Kräckers;
12. Großkühlschränke zur Lagerung der Rohware mit unterschiedlichen Temperatur

## Patentansprüche

1. Verfahren zur Herstellung von Käse-Kräckern mit den Schritten:
- Bereitstellen einer Käse-Rohmasse;
- Bereitstellen eines Mikrowellenofens;
- Portionieren der Käse-Rohmasse in einer feuerfesten Backform;
- Überführen der portionierten Käse-Rohmasse in den Mikrowellenofen,
- Backen der portionierten Käse-Rohmasse in dem Mikrowellenofen, und
- Entnehmen wenigstens eines gebackenen, portionierten Käse-Kräckers,
**dadurch gekennzeichnet,**
**dass** der Schritt des Backens unter einer abgegebenen Leistung des Mikrowellenofens von wenigstens 2800W, vorzugsweise von 2800W bis 3200W und ganz bevorzugt von wenigstens 3200W durchgeführt wird, wobei aus der Käse-Rohmasse durch die abgegebene Leistung sehr schnell Fett freigesetzt wird und die Käse-Rohmasse sehr schnell trocken/knusprig wird, ohne dass Zwischenprodukte entstehen können.

2. Verfahren nach Anspruch 1,
**dadurch gekennzeichnet,**
**dass** der Schritt des Überführens der Käse-Rohmasse ein Überführen wenigstens einer geformten Portion in der Backform umfasst.

3. Verfahren nach Anspruch 1 oder 2,
**dadurch gekennzeichnet,**
**dass** der Schritt des Entnehmens wenigstens eines gebackenen, portionierten Käse-Kräckers ein Reduzieren des Fettanteils des wenigstens einen gebackenen, portionierten Käse-Kräckers umfasst.

4. Verfahren nach Anspruch 3,
**dadurch gekennzeichnet,**
**dass** das Reduzieren des Fettanteils des wenigstens einen gebackenen, portionierten Käse-Kräckers ein Ablegen des wenigstens einen gebackenen, portionierten Käse-Kräckers auf einem saugfähigen Vlies umfasst.

5. Verfahren nach einem der vorstehenden Ansprüche,
**dadurch gekennzeichnet,**
**dass** der Schritt des Portionierens ein Zerteilen der Käse-Rohmasse in wenigstens eine Portion mit einem Gewicht von 3g bis 7g, vorzugsweise von 3g bis 6g, ganz bevorzugt von 4g umfasst.

6. Verfahren nach einem der vorstehenden Ansprüche,
**dadurch gekennzeichnet,**
**dass** der Schritt des Portionierens der Käse-Rohmasse ein Bereitstellen einer Mehrzahl von Backformen umfasst.

7. Verfahren nach einem der vorstehenden Ansprüche,
**dadurch gekennzeichnet,**
**dass** der Schritt des Backens eine Backdauer der Käse-Rohmasse in dem Mikrowellenofen von 20 bis 60 Sekunden, vorzugsweise von 30 bis 50 Sekunden und ganz bevorzugt von 36 bis 48 Sekunden umfasst.

8. Verfahren nach einem der vorstehenden Ansprüche,
**dadurch gekennzeichnet,**
**dass** die Käse-Rohmasse wenigstens eine Schnittkäsesorte umfasst.

9. Verfahren nach einem der vorstehenden Ansprüche,
**dadurch gekennzeichnet,**
**dass** die Käse-Rohmasse aus reinem Käse besteht.

## Claims

1. A method for the production of cheese crackers, having the steps of:
- providing a raw cheese mass;
- providing a microwave oven;
- portioning the raw cheese mass in an ovenproof baking form;
- transferring the portioned raw cheese mass into the microwave oven;
- baking the portioned raw cheese mass in the microwave oven; and
- removing at least one baked, portioned cheese cracker,
**characterized in that**
the step of baking is carried out using a power output for the microwave oven of at least 2800 W, preferably of 2800 W to 3200 W and more preferably of at least 3200 W, whereupon fat is released extremely rapidly from the raw cheese mass because of the power output and the raw cheese mass becomes dry/crisp extremely rapidly without intermediate products being able to be formed.

2. The method as claimed in claim 1,
**characterized in that**
the step of transferring the raw cheese mass comprises a transfer of at least one shaped portion in the baking form.

3. The method as claimed in claim 1 or claim 2,
**characterized in that**
the step of removing at least one baked, portioned cheese cracker comprises reducing the proportion of fat in the at least one baked, portioned cheese cracker.

4. The method as claimed in claim 3,
**characterized in that**
the reduction in the proportion of fat in the at least one baked, portioned cheese cracker comprises placing the at least one baked, portioned cheese cracker on an absorbent nonwoven material.

5. The method as claimed in one of the preceding claims,
**characterized in that**
the step of portioning comprises dividing up the raw cheese mass into at least one portion with a weight of 3g to 7g, preferably 3g to 6g, more preferably 4g.

6. The method as claimed in one of the preceding claims,
**characterized in that**
the step of portioning the raw cheese mass comprises the provision of a plurality of baking forms.

7. The method as claimed in one of the preceding claims,
**characterized in that**
the step of baking involves a baking time for the raw cheese mass in the microwave oven of 20 to 60 seconds, preferably 30 to 50 seconds and more preferably 36 to 48 seconds.

8. The method as claimed in one of the preceding claims,
**characterized in that**
the raw cheese mass comprises at least one type of hard cheese.

9. The method as claimed in one of the preceding claims,
**characterized in that**
the raw cheese mass entirely consists of cheese.

## Revendications

1. Procédé, destiné à fabriquer des crackers au fromage, comportant les étapes consistant à :
- mettre à disposition une masse brute de fromage ;
- mettre à disposition un four à micro-onde ;
- portionner la masse brute de fromage dans un moule de cuisson réfractaire ;
- transférer la masse brute de fromage portionnée dans le four à micro-onde,
- faire cuire la masse brute de fromage portionnée dans le four à micro-onde, et
- retirer au moins un cracker au fromage portionné, cuit,
**caractérisé**
**en ce que** l'étape de la cuisson au four est réalisée sous une puissance fournie par le four à micro-onde d'au moins 2800W, de préférence de 2800W à 3200W et de manière tout à fait préférentielle, de 3200W, sous la puissance fournie, de la matière grasse étant très rapidement libérée par la masse brute de fromage et la masse brute de fromage devenant très rapidement sèche /croustillante, sans risquer de donner naissance à des produits intermédiaires.

2. Procédé selon la revendication 1,
**caractérisé**
**en ce que** l'étape consistant à transférer la masse brute de fromage englobe un transfert d'au moins une portion moulée dans le moule de cuisson.

3. Procédé selon la revendication 1 ou 2,
**caractérisé**
**en ce que** l'étape consistant à retirer au moins un cracker au fromage portionné, cuit englobe une réduction de la part en matières grasses de l'au moins un cracker au fromage portionné, cuit au four.

4. Procédé selon la revendication 3,
**caractérisé**
**en ce que** la réduction de la part en matières grasses de l'au moins un cracker au fromage portionné englobe une dépose de l'au moins un cracker au fromage portionné, cuit au four sur un non-tissé absorbant.

5. Procédé selon l'une quelconque des revendications précédentes,
**caractérisé**
**en ce que** l'étape de portionnement englobe un fractionnement de la masse brute de fromage en au moins une portion d'un poids de 3 g à 7 g, de préférence de 3 g à 6 g, de manière tout à fait préférentielle, de 4 g.

6. Procédé selon l'une quelconque des revendications précédentes,
**caractérisé**
**en ce que** l'étape du portionnement de la masse brute de fromage englobe une mise à disposition d'une pluralité de moules de cuisson.

7. Procédé selon l'une quelconque des revendications précédentes,
**caractérisé**
**en ce que** l'étape de la cuisson au four englobe une durée de cuisson au four de la masse brute de fromage dans le four à micro-onde de 20 à 60 secondes, de préférence de 30 à 50 secondes, et de manière tout à fait préférentielle, de 36 à 48 secondes.

8. Procédé selon l'une quelconque des revendications précédentes,
**caractérisé**
**en ce que** la masse brute de fromage englobe au moins une variété de fromage à la coupe.

9. Procédé selon l'une quelconque des revendications précédentes,
**caractérisé**
**en ce que** la masse brute de fromage est constituée d'un pur fromage.
